# EUROPEAN PATENT APPLICATION

(11) **EP 4 597 389 A1**
(43) Date of publication of application: **06.08.2025**
(21) Application number: 23873011.3
(22) Date of filing: 25.09.2023
(51) Int. Cl.: G06Q 10/10, G06Q 10/06

(54) **INTERVIEW SCHEDULE MANAGEMENT SYSTEM AND HUMAN RESOURCE MATCHING INTERVIEW SCHEDULE MANAGEMENT METHOD USING SAME**

(30) Priority: 30.09.2022 KR 20220125120
(71) Applicant: Kim, Ji Sun, Seoul 08703 (KR)
(72) Inventor: Kim, Ji Sun, Seoul 08703 (KR)
(74) Representative: Plasseraud IP
(86) International application number: PCT/KR2023/014630
(87) International publication number: WO 2024/071894

(57) **Abstract**

The present invention relates to technology of verifying and managing an interview schedule resulting from matching of manpower between a job offer company terminal intended for offering a job to a person having professional manpower, and an expert freelancer according to each work project, and the present invention provides a system capable of generating and automatically registering data on a job offer in the form of a short sentence by extracting employment information concerning help-wanted manpower intended for the employment by a job offer company, deriving an available list of the most suitable interview from scanning data inputted by the job seeker at the same time as the registration of the job offer data in the form of the short sentence, and providing the job offer company with the list, thereby causing the interview to be conducted rapidly.

## Description

### CROSS-REFERENCE TO RELATED APPLICATIONS

This application claims the benefit under 35 U.S.C. section 371, of PCT International Application No. PCT/KR2023/014630, filed on September 25, 2023**,** which claims foreign priority to Korean Patent Application No. KR 10-2022-0125120, filed on September 30, 2022**,** in the Korean Intellectual Property Office, both of which are hereby incorporated by reference in their entireties.

### Technical Field

The present invention relates to technology of verifying and managing an interview schedule resulting from matching of manpower between a job offer company terminal intended for offering a job to a person having professional manpower, and an expert freelancer according to each work project.

### Background Art

In general, in the case of a head hunter who looks out for a person having a high level function or skill required from companies, he or she should meet many job seekers and should grasp their personal abilities through interviews or based on other information.

Also, in case of a job seeker seeking a job, he or she should obtain information on each company and information on employment, should also send in his or her application for applying an examination and should have interviews repeatedly before a job is found.

In the light of a company which performs work treatment by employing an employee in the form of a freelancer, not a formal employee, in order to expand a staff who is necessary temporarily to the company, it is necessary to grasp manpower dispatch agencies collecting talented people with ability required from the company. Furthermore, the company should select an agency which presents the most moderate pay from the agencies.

In order to establish a company, in the case that a founder is looking for a partner in order to expand funds or a talent for managing, he or she should find a partner (or a company which is in the same line of business) required for himself or herself, should grasp the partner's ability, and should decide to go into partnership with a person who presents the best possible terms among people having a possibility to form relations.

The matter described above is also applied to a case in which when a project (a design / development) is conducted, it is necessary to find someone in order to proceed with the project together. In this case, necessary information on a partner should be found, whether or not the information is believable should be determined, each and every person's specific ability should be grasped, and when there are a large number of people suitable for proceeding with the project together, the most favorable person among them should be found. Incidentally, to do so, it is problematic in that time should be invested and a burden of trial and error exists.

Meanwhile, thanks to the fast growth of Internet technology and a mobile communications network, and an increase in spread, an intermediate management system for a job offer and job hunting for freelancers has positively been used using the Internet and the mobile communications network.

With respect to an intermediate management system for a job offer and job hunting for freelancer workers according to a conventional art, it was general that a job offer company and a job seeker register information on a job offer and information on job hunting, and employment is requested or application for admission to a company is performed through search of the registered information. However, since this system only functions to disclose information, a member of the system should individually inquire into targets meeting with his or her desired conditions due to huge information on job offers and huge information on job hunting, so it was problematic in that it takes a lot of time for conducting a search.

Recently, with respect to the intermediate management system for job offers and job hunting, a system of matching and providing suitable information by comparing careers or qualifications required by a job offer company and a job seeker with one another has been embodied, so convenience has been increasing. However, in this job offer and job hunting system, the level of accuracy for matching of manpower having a desired qualification is not high, and a service of adjusting an interview schedule for fixing a job offer by a separate contact should be linked offline, so the necessity for developing a system of unifying conducting of the interview schedule after matching, and a schedule for the employment of a person having the relevant manpower has been increasing.

### Detailed Description of the Invention

### Technical Problem

The present invention has been devised for solving the aforesaid necessity, and an object of the present invention is to provide a system of managing an interview schedule, the system being capable of deriving human resources meeting with a condition for a job offer of a job offer company in real time, automatically performing management of the interview schedule through the system by deriving matched information from dividing manpower suitable for the condition into unit factors according to a weighted value for employment, a similar project, a career, pay, a residential place, and a keyword, and automatically managing the schedule for conducting an interview, thereby maximizing efficiency of the system for job offers and job hunting.

Also, the other object of the present invention is to provide a system capable of generating and automatically registering data on a job offer in the form of a short sentence by extracting information on employment concerning help-wanted manpower intended for employment by a job offer company, deriving an available list of the most suitable interview from scanning data inputted by a job seeker at the same time as the registration of the job offer data in the form of the short sentence, and providing the job offer company with the list, thereby causing the interview to be conducted rapidly.

### Solution for Solving the Problem

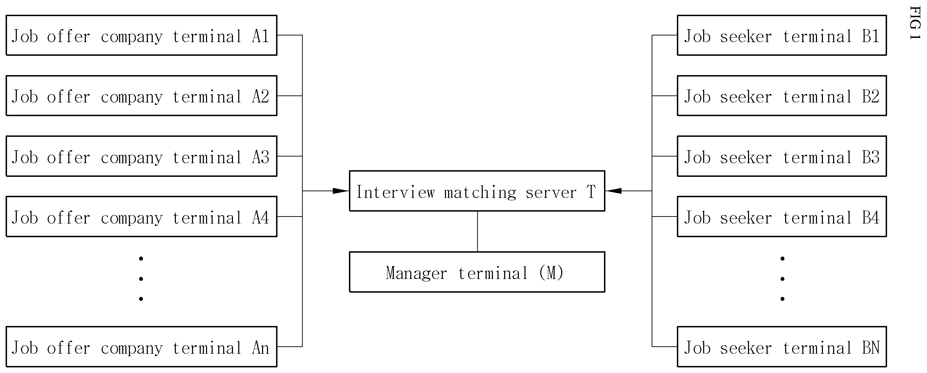

With respect to a means for solving the aforesaid problems, according to an exemplary embodiment of the present invention, as illustrated in FIG. 1 to FIG. 5, a system of managing an interview schedule may be provided, the system comprising: an interview matching server T configured to input and receive inputted information on a job offer and inputted information on job hunting and to apply information on a weighted value which is set up, thereby providing information on suitable manpower through matching; a job offer company terminal An configured to input information on manpower required for a project in progress or work, thereby inputting information on a job offer in the interview matching server T or to transmit it to the interview matching server; a job seeker terminal Bn configured to input information on job hunting including information on a career concerning a person having manpower and seeking a job and information on expenses in the interview matching server T or to transmit it to the interview matching server; and a manager terminal CT configured to verify and provide the information on the job offer and the information on the job hunting which are matched by connecting with the interview matching server T, to add and provide the verified information on the job offer, to perform the management of an interview schedule on the basis of the job offer information and the job hunting information matched, and to provide information on a contract concerning an interview case adopted after an interview is fixed and performed.

Also, with respect to a method of managing an interview schedule through the aforesaid interview schedule management system, the method may comprise: a first step of inputting, through a job offer company terminal An, information on manpower required for a project in progress or work in an interview matching server T, thereby inputting information on a job offer or transmitting it; a second step of inputting, through a job seeker terminal Bn, information on job hunting including information on a career concerning a person having manpower and seeking a job and information on expenses in the interview matching server T, or transmitting it to the interview matching server; a third step of inputting and receiving, from the interview matching server T, the inputted information on the job offer and the inputted information on the job hunting, and performing matching of information on suitable manpower and providing information on the matching of the manpower by applying information on a weighted value which is set up; a fourth step of verifying, through a manager terminal CT, the matched information on the matching of the manpower by connecting with the interview matching server T, and adding or deleting newly verified information on the job hunting which is added, thereby providing the job seeker terminal Bn with the information; a fifth step of transmitting information selected from schedule data for fixing the interview schedule to the relevant job seeker terminal Bn and the relevant job offer company terminal An on the basis of the information on the job hunting corresponding to the matched information on the manpower adopted from the job offer company terminal An; and a sixth step of carrying out, through the interview matching server T from the manager terminal CT, management of the schedule for conducting an interview concerning the interview schedule fixed through the job seeker terminal Bn and the job offer company terminal An, and providing information on a contract concerning an adopted interview case.

### Effect of the Invention

According to an exemplary embodiment of the present invention, it is effective to provide a system capable of generating and automatically registering data on a job offer in the form of a short sentence by extracting information on employment concerning help-wanted manpower intended for employment by a job offer company, deriving an available list of the most suitable interview from scanning data inputted by a job seeker at the same time as the registration of the job offer data in the form of the short sentence, and providing the job offer company with the list, thereby causing the interview to be conducted rapidly.

Also, according to the present invention, it is advantageous in that a system of managing an interview schedule can be provided, which is capable of managing an interview schedule, the system being capable of deriving human resources meeting with a condition for a job offer of a job offer company in real time, automatically performing management of the interview schedule through the system by deriving matched information from dividing manpower suitable for the condition into unit factors according to a weighted value for employment, a similar project, a career, pay, a residential place, and a keyword, and automatically managing the schedule for conducting an interview, thereby maximizing efficiency of the system for job offers and job hunting.

### Brief Description of the Drawings

FIG. 1 is a block diagram concerning a system of managing an interview schedule (hereinafter referred to as "the present invention") according to an exemplary embodiment of the present invention.
FIG. 2 and FIG. 3 are block diagrams illustrating each main constitution of an interview matching server T according to the present invention.
FIG. 4 illustrates a configuration module to which the system is applied in such a manner that a manager terminal CT connects with the interview matching server T.
FIG. 5 is a block diagram illustrating a method of managing an interview schedule based on the system according to the present invention.

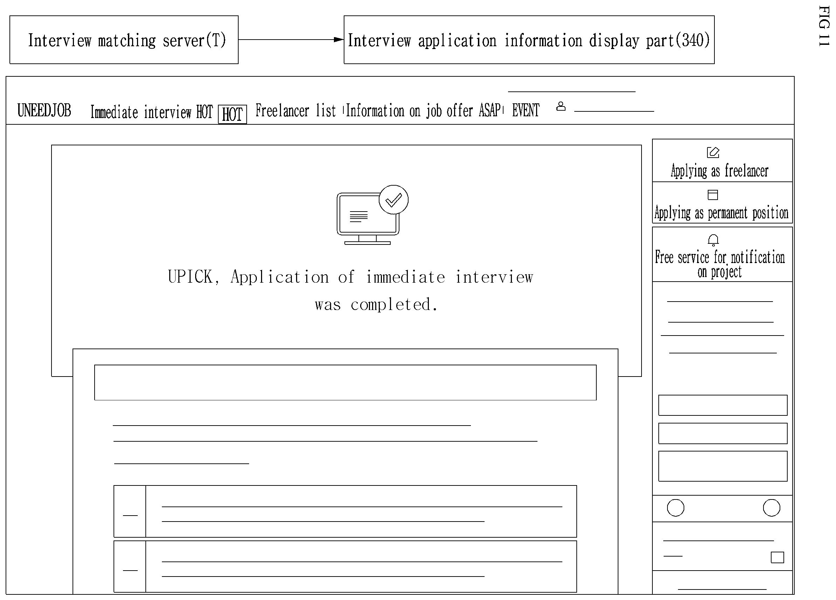

FIG. 6 to FIG. 22 are images illustrating their respective processes of applying the system according to the present invention.

### [Description of Reference Numerals]

A: Job offer company terminal
B: Job seeker terminal
Job Seeker terminal
T: Interview matching server
M: Manager terminal
100: Job offer information input module
200: Job hunting information input module
300: Interview information formation module
400: Matched information formation module
500: Manager terminal

### Mode for Carrying Out the Invention

The advantages and features of the present invention, and the method for accomplishing them will be clear with reference to the accompanying drawings and the exemplary embodiments described below in detail. However, the present invention should not be limited to the exemplary embodiments described herein, but may be embodied in the other forms. Rather, the exemplary embodiments introduced herein are provided so that the contents disclosed herein can be thorough and complete, and can fully convey the scope of the present invention to those skilled in the art.

The terms used in the present specification are only intended for describing specific exemplary embodiments and are not intended to limit the present invention. The singular forms are intended to include the plural forms as well, unless the context clearly indicates otherwise. In the present specification, the terms, such as "comprise" or "have" and so on, are intended to show that there are features, numerals, steps, operations, constituent elements, component parts, or a combination thereof described herein, and should not be construed as previously excluding a possibility of the existence or addition of one or more other features, or numerals, steps, operations, constituent elements, component parts, or a combination thereof.

Unless the definitions are indicated otherwise, all the terms used herein including technical or scientific terms have the same meanings as those that are commonly understood to those having ordinary skill in the technical field. Also, the terms as generally used and defined in a dictionary should be construed as having meanings corresponding to contextual meanings concerning the relevant technology, and should not be interpreted ideally and excessively as having formal meanings, unless they are clearly defined in the present specification.

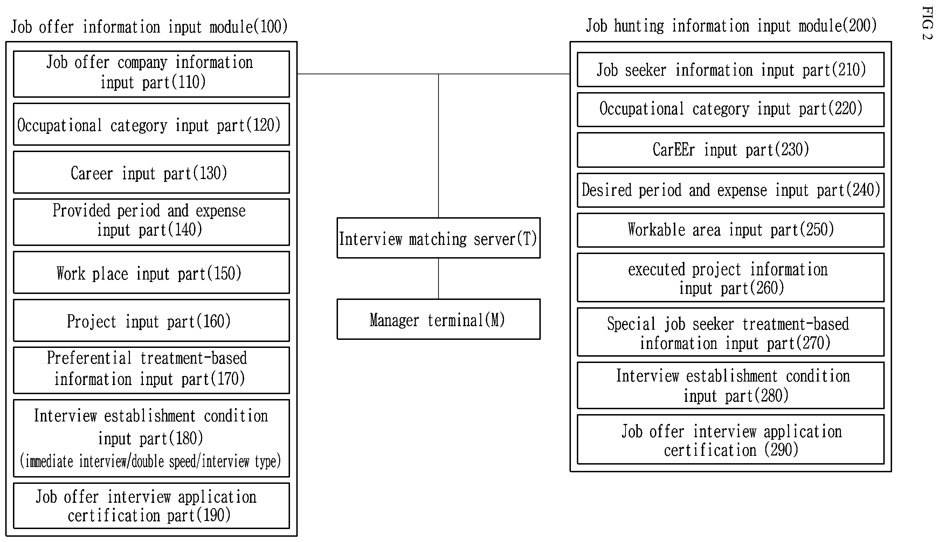

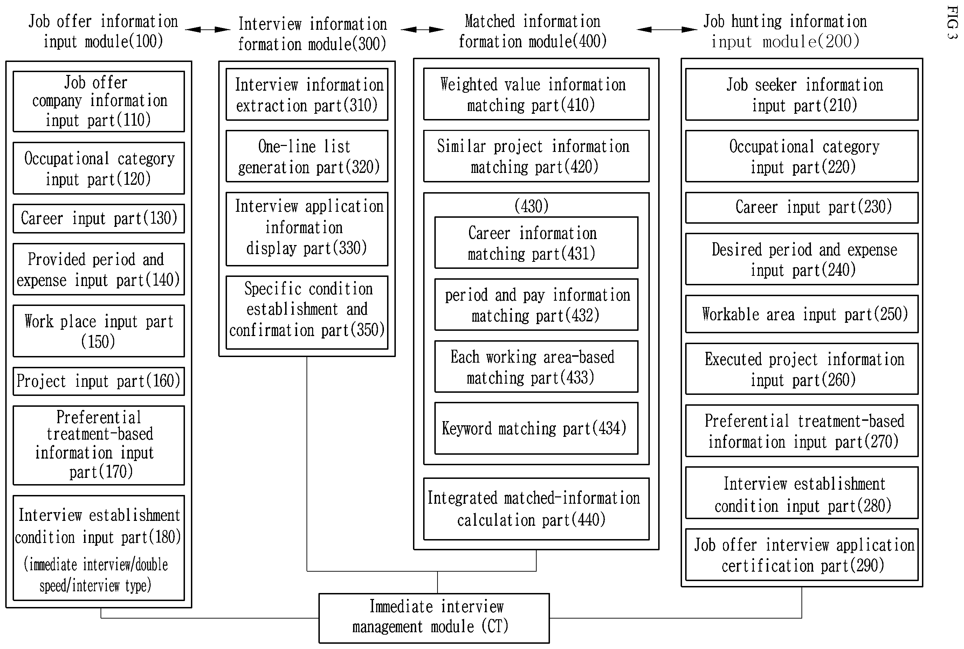

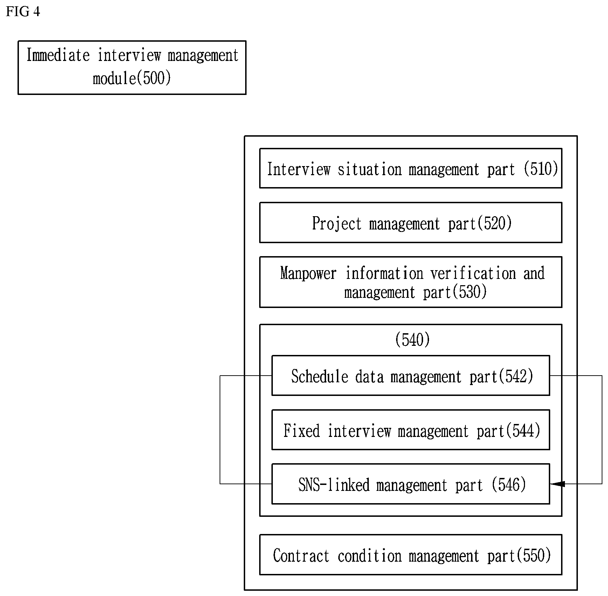

FIG. 1 is a block diagram concerning a system of managing an interview schedule (hereinafter referred to as "the present invention") according to an exemplary embodiment of the present invention, and FIG. 2 and FIG. 3 are block diagrams illustrating each main constitution of an interview matching server T according to the present invention. FIG. 4 illustrates a configuration module to which the system is applied in such a manner that a manager terminal CT connects with the interview matching server T.

Referring to FIG. 1 to FIG. 4, the system according to the present invention may comprise: an interview matching server T configured to input and receive inputted information on a job offer and inputted information on job hunting and to apply information on a weighted value which is set up, thereby providing information on suitable manpower through matching; a job offer company terminal An configured to input information on manpower required for a project in progress or work, thereby inputting information on a job offer in the interview matching server T or to transmit it to the interview matching server; a job seeker terminal Bn configured to input information on job hunting including information on a career concerning a person having manpower and seeking a job and information on expenses in the interview matching server T or to transmit it to the interview matching server; and a manager terminal CT configured to verify and provide the information on the job offer and the information on the job hunting which are matched by connecting with the interview matching server T, to add and provide the verified information on the job offer, to perform the management of an interview schedule on the basis of the job offer information and the job hunting information matched, and to provide information on a contract concerning an interview case adopted after an interview is fixed and performed.

The job offer company terminal An is defined as a terminal device of making a connection with the interview matching server T according to the present invention via cable communications and wireless communications, and transmitting or inputting information about a job offer required according to each project. In general, the job offer company terminal An corresponds to a costumer company which seeks professional manpower required according to each project, and the job offer company terminal carries out a process for admission as membership of the interview matching server T according to the present invention in the primary stage and facilitates the use of services through the certification of information on the costumer company and certification of the relevant company.

The job offer company terminal An, as illustrated in FIG. 2, inputs information about necessary manpower (hereinafter referred to as "the job offer information") by connecting with the interview matching server T, and the interview matching server T provides a job offer information input module 100 illustrated in FIG. 2 so that an essential particular to be inputted can be inputted in the job offer company terminal An.

This job offer information input module 100 may comprise: a job offer company information input part 110 configured to input company information on a customer company, and information on a project, such as information about the existence of a real customer company, the existence of a real project, and so on; an occupational category input part 120 configured to input the kind of a project to be participated by a person to whom a job will be offered; a career input part 130 configured to input a preferential career matter to which a preferential condition and a weighted value concerning manpower aimed at a job offer are applicable; a provided period and expense input part 140 configured to input information on a provided period and expenses of a project to be carried out; a work place input part 150 configured to input information on a work place where the project is performed; a project input part 160 configured to record basic information on the project so as to enable information on a published project to be confirmed; a preferential treatment-based information input part 170 configured to input information on preferential treatment concerning manpower aimed at a job offer; an interview establishment condition input part 180 configured to select differential conditions according to expenses so as to cause matching and treatment of information on job offer to be carried out rapidly, or to select the form of an interview, such as a face-to-fact interview, a cable interview, a video interview, and so on; and a job offer interview application certification part 190 configured to certify reliability concerning an interview case applied by a customer company which uploads the job offer information.

The matters inputted through the aforesaid job offer information input module 100 are able to cause unit factors for one line matching to be extracted from an interview information formation module 300 and a matched information formation module 400 which are described below, and form a text of the job offer information in the form of a short sentence or provide basic information so as to cause matching to be carried out.

Also, as illustrated in FIG. 2, the job seeker terminal Bn inputs information about a project in which a job seeker wishes to participate (hereinafter referred to as "the job hunting information" by connecting to the interview matching server, and the internet matching server T provides the job hunting information module 200 illustrated in FIG. 2 so that essential matters to be inputted can be inputted through the job seeker terminal Bn.

The job seeker terminal Bn functions to input the job hunting information including information about a career concerning a person having manpower who wishes to seek a job and information on expenses in the interview matching server T through the job hunting information input module 200, or to transmit it to the interview matching server.

To do so, it is preferable that the job hunting information input module 200 equally provides items inputted from the job offer information input module 100 and the other item corresponding thereto, which is intended for increasing the efficiency of matching to the maximum in the light of a built career and a preferential career required by a job offer company, and the character of a project.

Specifically, the job hunting information input module may comprise: a job seeker information input part 210 through which a freelancer, a job seeker, inputs personal information (information on his or her age and sex, and basic human information for the use of certification; an occupational category input part 220 configured to input the kind of a project in which a person having manpower and seeking a job will participate; a career input part 230 configured to input a preferential career matter to which a preferential condition and a weighted value concerning a freelancer seeking a job are applicable; a desired period and expense input part 240 configured to input information on a provided period and expenses for a workable project; a workable area input part 250 configured to designate various areas in which the freelancer can work, thereby inputting information on the workable areas; a project input part 260 configured to input detailed information on a name and a character, a period, and so on of a project executed previously by the freelancer, thereby enabling the character and classification of a project to be confirmed and to be carried out; a preferential treatment-based information input part 270 for a job seeker configured to input information on a satisfied condition for a freelancer suitable for the standard of preferential information concerning a person having manpower aimed at a job offer; an interview establishment condition input part 280 configured to select the form of an interview, such as a face-to-face interview, a cable interview, a video interview, and so on; and a job offer interview application certification part 290 configured to certify reliability on an executed career according to each project related with career information concerning a freelancer (a job seeker) who uploads information on job hunting.

The information inputted through the job hunting information input module 200 described above is used for a purpose of extracting information on matched factors which may be matched with unit factors extracted from the matters inputted from the aforesaid job offer information input module 100.

FIG. 3 is a block diagram illustrating the constitution of the interview matching server T according to the present invention described above through the sections concerning FIG. 1.

Referring to FIG. 3, the interview matching server T is furnished with a plurality of input parts intended for inputting the inputted information on the job offer through the job offer company terminal An, and comprises the job offer information input module 100 configured to input at least one or more of pieces of information among information on a job offer company, information on an occupational category, information on a career, information a provided period and expenses, information on a work place, a project name, and information on preferential treatment, and the interview matching server is also furnished with a plurality of input parts intended for inputting the inputted information on the job hunting through the job seeker terminal Bn, and comprises the job hunting information input module 200 configured to input at least one or more of pieces of information among personal information on a job seeker, information on a desired occupational category, information on a career, information on a desired period and expenses, information on a workable area, information on a project performed previously, information on preferential treatment, information on an interview type. The constitution of the job offer information input module 100 and the constitution of the job hunting information input module 200 are the same as those described above through the description concerning FIG. 2.

Furthermore, the interview matching server T further comprises the interview information formation module 300 configured to form information on a one-line text concerning the job offer information on the basis of the information inputted through the job offer information input module 100 and the job hunting information input module 200, or to extract various unit factors for matching.

For this, the interview information formation module 300 may comprise: an interview information extraction part 310 configured to analyze information inputted as the job offer information and the job hunting information, thereby classifying the analyzed information into unit factors including a career, pay, a residential house, and a keyword according to each project; a one-line list generation part 320 configured to extract information on the type of an interview by analyzing the inputted information on the job offer inputted through the job offer information input module 100, and to extract text data of a one line list by extracting a condition for the job offer; and a specific condition establishment and confirmation part 340 configured to classify the relevant text data of the one line list by sorting whether or not to conduct a preferential interview based on the establishment and confirmation of a specific condition for the interview. Moreover, it may comprise an interview application information display part 330 configured to collect information on a request for an interview as one piece of information and to finally display it.

Also, the interview matching server T according to the present invention may further comprise a matched information formation module 400 configured to form matched information on the basis of the information on the unit factors extracted from the interview information formation module 300 and to calculate a result of matching.

Specifically, the matched information formation module 400 may comprise: a weighted value information matching part 410 configured to perform matching of information on job hunting based on information on a weighted value for employment presented from the job offer information with respect to manpower meeting with the conditions of information on a job offer on the basis of the unit factors classified from the interview information extraction part 310; a similar project information matching part 420 configured to match the job hunting information with unit factors according to an executed career of a similar project based on a career executed by a job seeker extracted from the job hunting information; an establishment condition matching part 430 configured to perform matching of the job hunting information by setting up career information, information on a period and pay, information on working areas, and a keyword corresponding to detailed unit factors, which are extracted from the job hunting information and which are presented and inputted by the job seeker, into the unit factors; and an integrated matched-information calculation part 440 configured to derive information on rankings matched according to each unit factor, or a list concerning manpower matched optimally according to an average of the overall matched rankings from extracting matched information on the basis of various unit factors, thereby displaying listed information.

FIG. 4 illustrates the constitution of an interview management module 500 configured to manage an interview schedule and matched information on manpower by a connection of the manager terminal CT provided from the interview matching server T according to the present invention.

Referring to FIG. 4, the interview management module 500 may comprise: an interview situation management part 510 configured to display the job offer information and the project information inputted through the job offer company terminal An, and to provide an interface which manages situations concerning matching of manpower calculated through the integrated matched-information calculation part 440 and listed automatically; a project management part 520 configured to manage a situation concerning matching of manpower listed by matching between the manpower information and the project based on the job offer information, and to manage the designation of a manager in charge of a matched case for the relevant interview; a manpower information verification management part 530 configured to verify conformity or non-conformity to the condition by verifying matched manpower resulting from the situation concerning matching of the manpower calculated through the integrated matched-information calculation part 440 and listed automatically, and to manage registration by adding a new manpower information pool; a schedule control part 540 configured to transmit information on the matched manpower which is finally verified to the job seeker terminal and the job offer company terminal, and to manage the interview schedule so as to cause the interview schedule to be selected through a social network service (SNS) account linked with the job seeker terminal and the job offer company terminal; and a contract condition management part 550 configured to transmit a confirmed and corrected contract to the job seeker terminal and the job offer company terminal when information on a decision to fix employment and corrected information on the condition for employment are transmitted through the job offer company terminal An after the interview schedule confirmed through the schedule control part 540 is carried out.

The interview management module 500 described above may verify the matched manpower and may recommend newly matched manpower by entirely managing automatically matched information provided from the interview matching server T according to the present invention, or may manage information which is reliable to an aimed subject (whether or not the job offer company exists at the time of matching, whether or not the project is maintained, the verification of reliability concerning a job seeker' or freelancer's career, and so on) by checking information based on situations of the job seeker or the job offer company in real time through verification.

Furthermore, a discriminatory property is established in the light of the fact that when the interview schedule is carried out and fixed and an employment contract is fixed, a corrected resume and a written contract are provided from a neutral position so that matching of manpower having mutually reliability can be realized.

The processes to which the present invention described above based on FIG. 1 to FIG. 4 is applied are described in detail on the basis of the drawings described below.

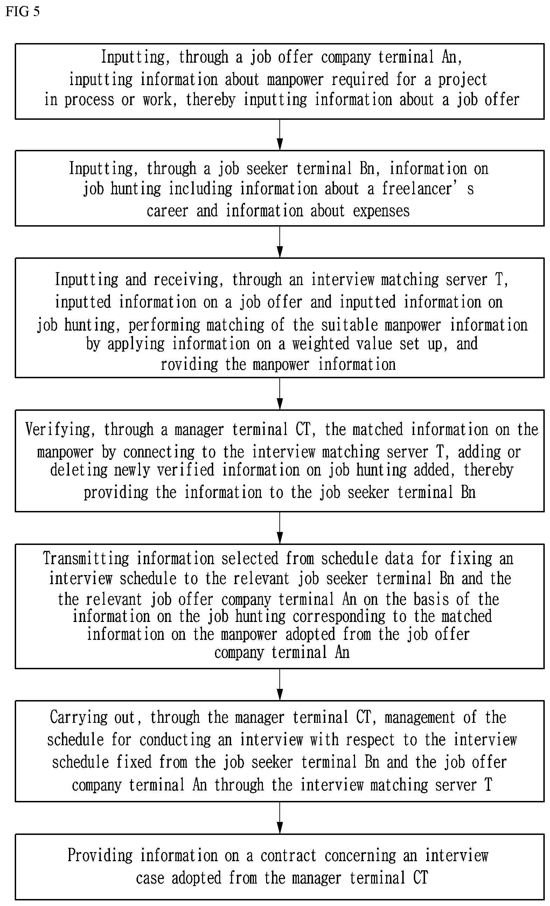

A method of managing an interview schedule (hereinafter referred to "the method") with respect to the system according to the present invention may be performed by the following process as illustrated in FIG. 5.

Specifically, the method may comprise: a first step of inputting, through a job offer company terminal An, information on manpower required for a project in progress or work in an interview matching server T, thereby inputting information on a job offer or transmitting it; a second step of inputting, through a job seeker terminal Bn, information on job hunting including information on a career concerning a person having manpower and seeking a job and information on expenses in the interview matching server T, or transmitting it to the interview matching server; a third step of inputting and receiving, from the interview matching server T, the inputted information on the job offer and the inputted information on the job hunting, and performing matching of information on suitable manpower and providing information on the matching of the manpower by applying information on a weighted value which is set up; a fourth step of verifying, through a manager terminal CT, the matched information on the matching of the manpower by connecting with the interview matching server T, and adding or deleting newly verified information on the job hunting which is added, thereby providing the job seeker terminal Bn with the information; a fifth step of transmitting information selected from schedule data for fixing the interview schedule to the relevant job seeker terminal Bn and the relevant job offer company terminal An on the basis of the information on the job hunting corresponding to the matched information on the manpower adopted from the job offer company terminal An; and a sixth step of carrying out, through the interview matching server T from the manager terminal CT, management of the schedule for conducting an interview concerning the interview schedule fixed through the job seeker terminal Bn and the job offer company terminal An, and providing information on a contract concerning an adopted interview case.

### 1. Inputting information on job offer company (first step)

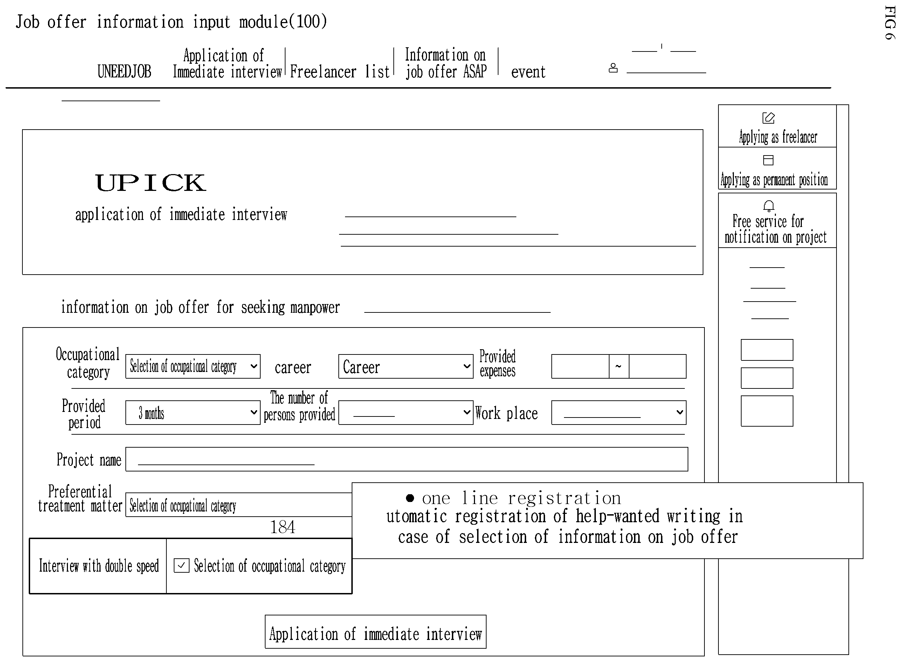

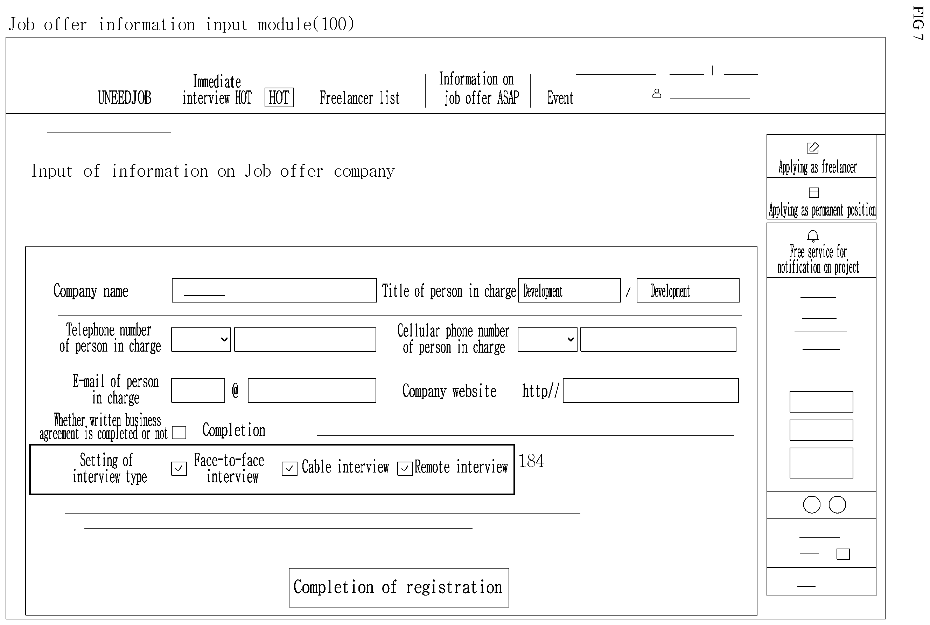

FIG. 6 and FIG. 7 illustrate each process of inputting information on a job offer in such a manner as to input, through the job offer company terminal An from the interview matching server T, information on manpower required for a project in progress or work.

FIG. 6 and FIG. 7 exemplify the aforesaid job offer information input module 100 provided through an interface picture from the interview matching server T.

In the job offer company terminal An, information, such as information on a job offer company, an occupational category, a career, a provided period and expenses, a work place, and a project name, and information on preferential treatment, is inputted by a plurality of input parts intended for inputting inputted information on job offers and provided in FIG. 6 and FIG. 7.

In particular, since the job offer information input module 100 is furnished with a preferential interview selection part 182 configured to set up and provide matched time for an interview and the number of matched cases in a state of being graded according to paid expenses, the matched time for the interview conducted in the present invention is graded to be carried out rapidly so that the range of choice is variously realized, and in the case that there is a necessity for providing a person having manpower with an urgent job offer, matching of manpower may be realized before everything else so that the convenience of a customer company can increase. Also, the interview request type selection part 184 configured to provide selected information by dividing an interview type into the categories of a face-to-face interview, a cable interview, and a remote interview is provided in advance so that a person having manpower matched later can widen choices for an interview based on the type of the interview.

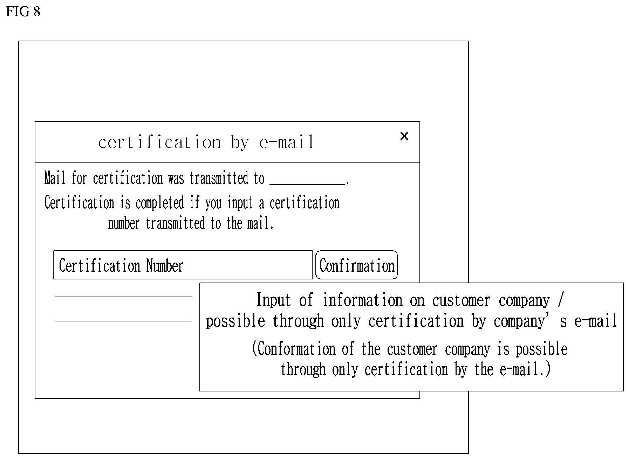

When an item for the registration of information on the application of an interview is finally clicked, as illustrated in FIG. 8, certification is realized through a customer company's formal company e-mail account, and formal registration is realized.

### 2. Input of information on job seeker (second step)

Next, with respect to a step carried out as a process separated from the first step, a process of inputting, through the job seeker terminal Bn, information on job hunting including information a career concerning a person having manpower and seeking a job in the interview matching server T, or transmitting it to the interview matching server is performed. This is carried out, as described above, in the aforesaid job seeker information input module 200 (FIG. 2) and is utilized as extracted information on a factor which can be matched with the information inputted through the first step.

### 3. Extracting and matching process of information on job hunting (third step)

With respect to the next process, the process of inputting and receiving, through the interview matching server T, the inputted information on the job offer and the inputted information on the job hunting, and applying information on a weighted value set up, thereby performing matching of suitable information on manpower and providing matched information on the manpower may be carried out.

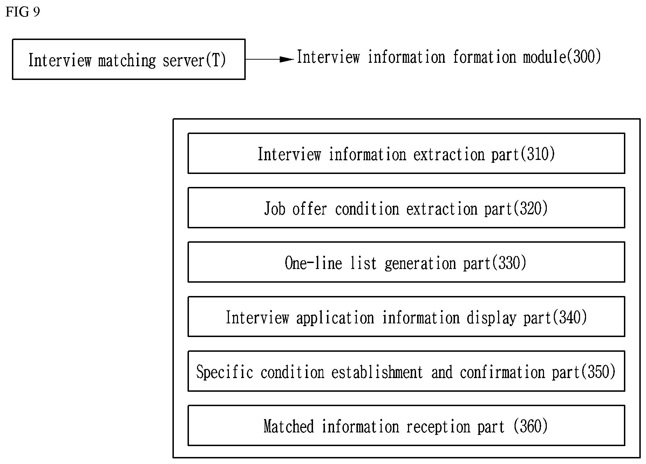

FIG. 9 illustrates the constitution of the interview information formation module 300 according to the present invention described above through FIG. 2. The process of the third step on the basis of this is described below.

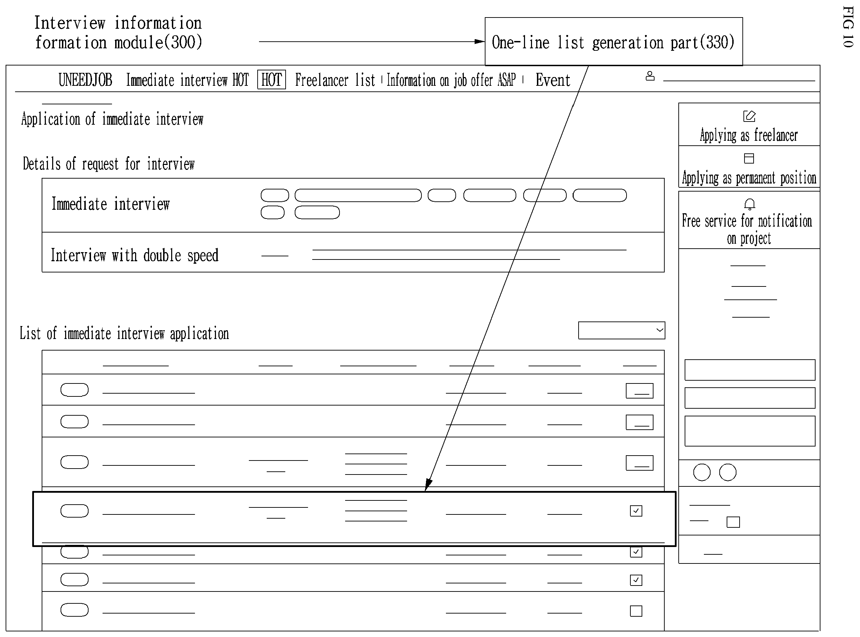

FIG. 10 illustrates an operational result of the one-line list generation part 330 configured to extract information on the type of an interview by analyzing the inputted information on the job offer inputted through the job offer information input module 100, and to extract conditions for the job offer as the text data of the one line list.

In this case, based on the establishment and confirmation of a specific condition for an interview, when there is a received case for which treatment is rapidly required through the special condition establishment confirmation part 350 configured to sort whether or not to proceed with a preferential interview, and to thereby classifying the text data of the relevant one lined list, a discernment cover (red-colored blinking text, thick bold fonts, and so on), such as "double speed," may be added to and displayed in the relevant list.

Moreover, a process of matching later may be performed by the interview information extraction part 310 configured to analyze information inputted as the job offer information and the job hunting information, thereby classifying the analyzed information into unit factors including a project name, a career, pay, a residential place, and a keyword according to each project.

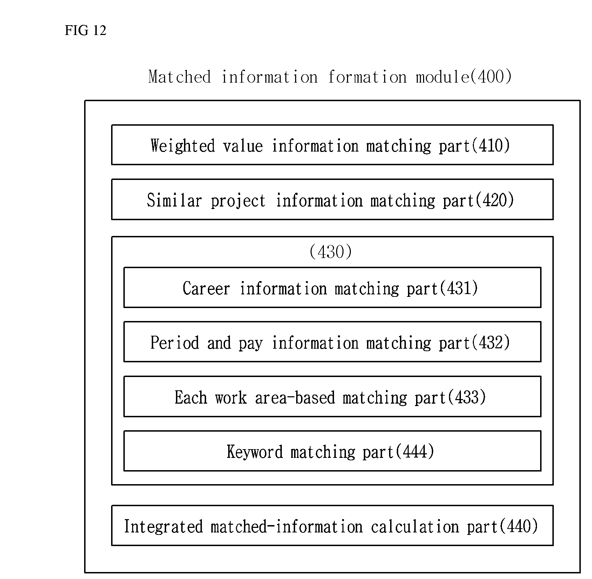

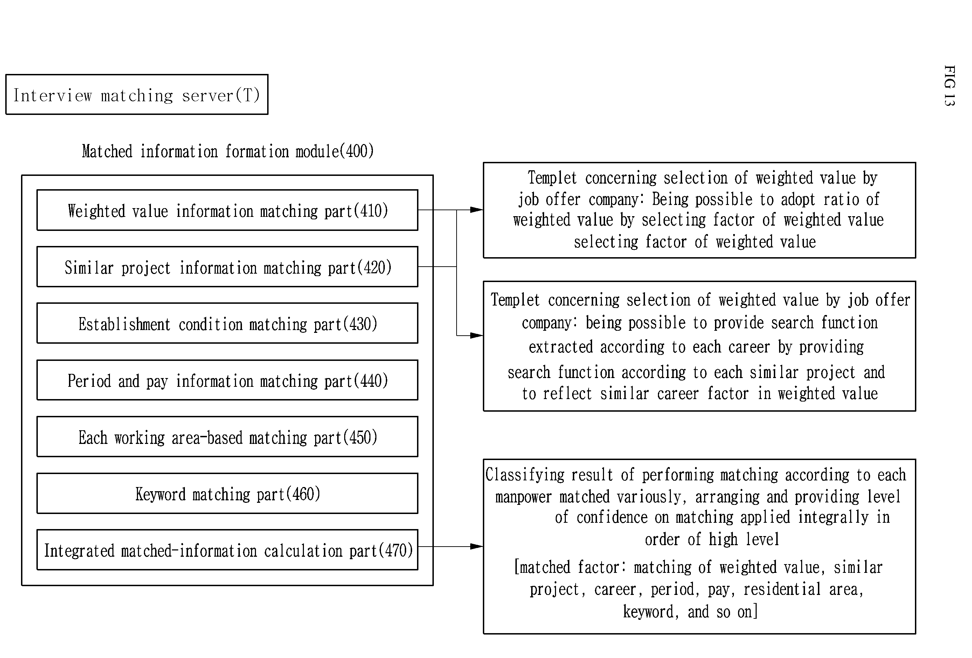

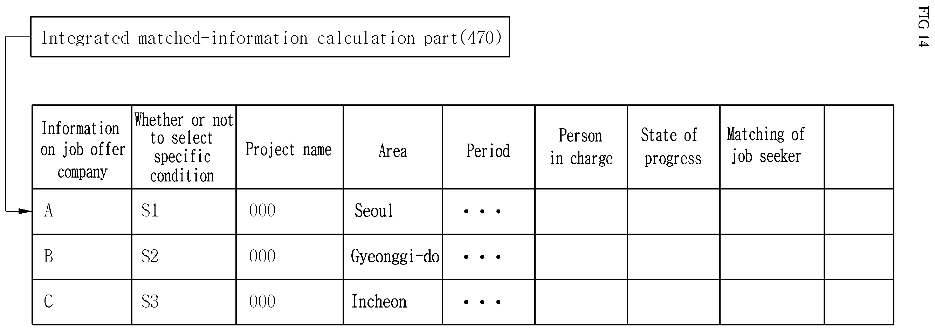

FIG. 12 to FIG. 14 illustrate each constitution of the matched information formation module 400 described above based on FIG. 2, and matching is automatically embodied through: a weighted value information matching part 410 configured to perform matching of the information on the job hunting based on information on a weighted value for employment presented from the job offer information with respect to a person having manpower who is suitable for conditions of the information on the job offer on the basis of the unit factors classified from the interview information extraction part 310; a similar project information matching part 420 configured to match the job hunting information with the unit factors according to an executed career related with a similar project based on the executed career of the job seeker extracted from the job hunting information; an establishment condition matching part 430 configured to perform matching of the job hunting information by setting up information on a career, information on a period and pay, information on a working areas, and a keyword corresponding to detailed unit factors, which are extracted from the job hunting information and which are presented and inputted by the job seeker, into the unit factors; and an integrated-matched information calculation part 440 configured to derive information on rankings matched according to each unit factor, or a list concerning manpower matched optimally according to an average of the overall matched rankings from extracting matched information matched on the basis of said various unit factors, displaying information listed.

### 4. Verification and management step from manager terminal, (fourth step)

After this, with respect to a process, the fourth step of verifying the matched information on the manpower by connecting to the interview matching server T through the manager terminal CT, and adding or deleting newly verified information on job hunting which is added, thereby providing the job seeker terminal Bn with the information may be performed.

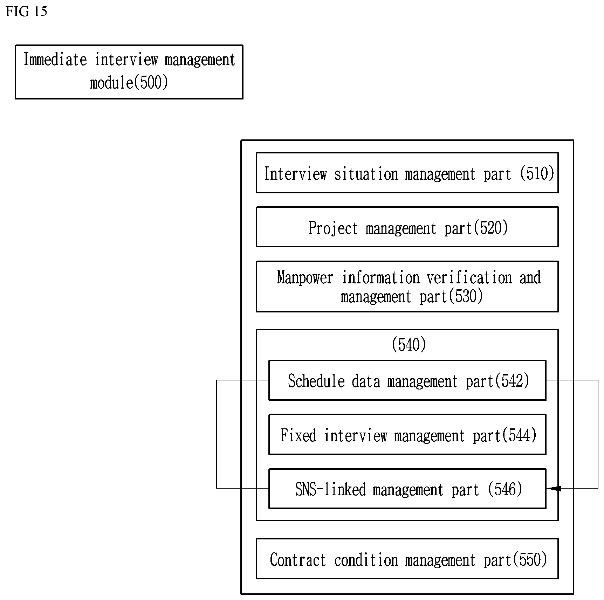

The process of the fourth step may be performed by the interview management module 500 configured to manage an interview schedule and matched information on manpower by the manager terminal CT illustrated in FIG. 15 connecting thereto.

The interview management module 500 comprises: an interview situation management part 510 configured to display the job offer information and the project information inputted through the job offer company terminal An, and to provide an interface which manages a matched situation concerning manpower calculated through the integrated matched-information calculation part 440 and listed automatically; a project management part 520 configured to manage the matched situation concerning the manpower listed by matching of the project according to the job offer information, and the manpower information and to manage the designation of a manager in charge of a matched case of the relevant interview; a manpower information verification management part 530 configured to verify conformity or non-conformity to the condition by verifying matched manpower based on the situation concerning matching of manpower, and to manage registration by adding a new manpower information pool; a schedule control part 540 configured to transmit finally verified information on the matched manpower to the job seeker terminal and the job offer company terminal, and to manage an interview schedule so as to cause the interview schedule to be selected through an SNS account linked by the job seeker terminal and the job offer company terminal; and a contract condition management part 550 configured to transmit a confirmed and corrected contract to the job seeker terminal and the job offer company terminal when information on a decision to fix employment and corrected information on the condition for employment are transmitted through the job offer company terminal An after the interview schedule confirmed through the schedule control part 540 is conducted.

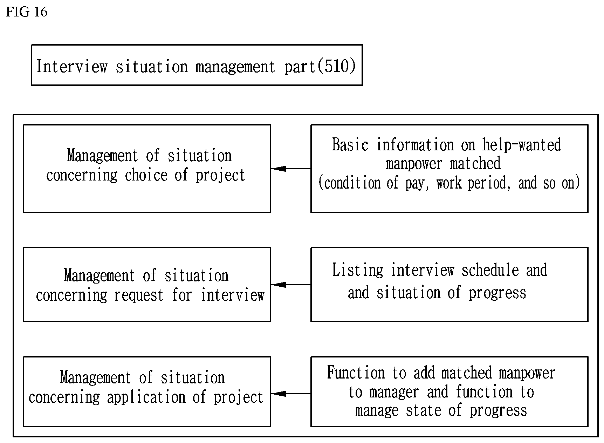

The process of the constitution described above is carried out in such a manner that the manager terminal CT connects with the interview matching server T, and this process is able to be embodied through an interface picture which is embodied from the manager terminal so that a function as shown in FIG. 16 can be furnished. In the manager terminal CT, a situation concerning the application of an interview may be confirmed through the interface picture. In this case, with respect to the indications of information provided, a situation concerning the choice of a project, a situation concerning a request for an interview, and a situation concerning automatic matching of a matched freelancer (a job seeker) are displayed.

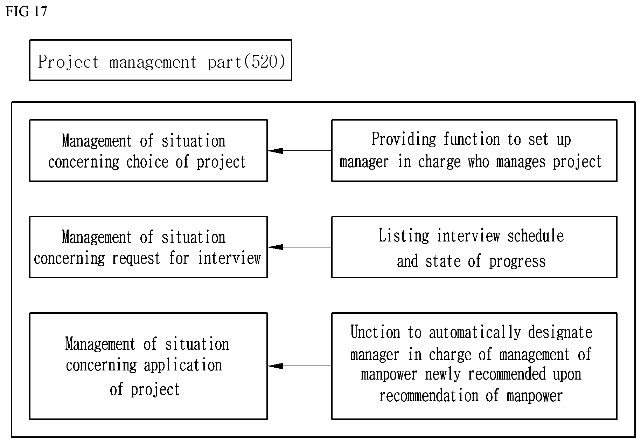

FIG. 17 illustrates a function of the project management part 520 configured to adjust and set up detailed items of the function provided from a management picture of the situation on the interview provided to the interface picture shown in FIG. 16, and in the item of "the situation concerning the request for a project," a function to set up a manager in charge may be set up, and when the manager in charge is set up, another manager in charge of a matched freelancer (manpower) is also automatically changed into a designated manager.

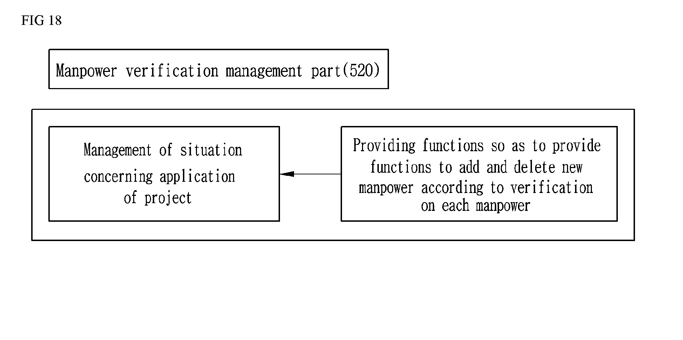

FIG. 18 indicates a function of the manpower information verification management part 530 configured to verify and manage the manpower information from the indication of the situation indicated through FIG. 16, the manager in charge may add a verified freelancer through an item for "the addition of manpower," and freelancers who are rejected from the verification of manpower may be changed through "a correction" or "deletion" from a list of manpower matched automatically.

Based on this verification of the matched list, the matched list which is verified may be provided to the job offer company terminal, so reliability of a provided service can enhance.

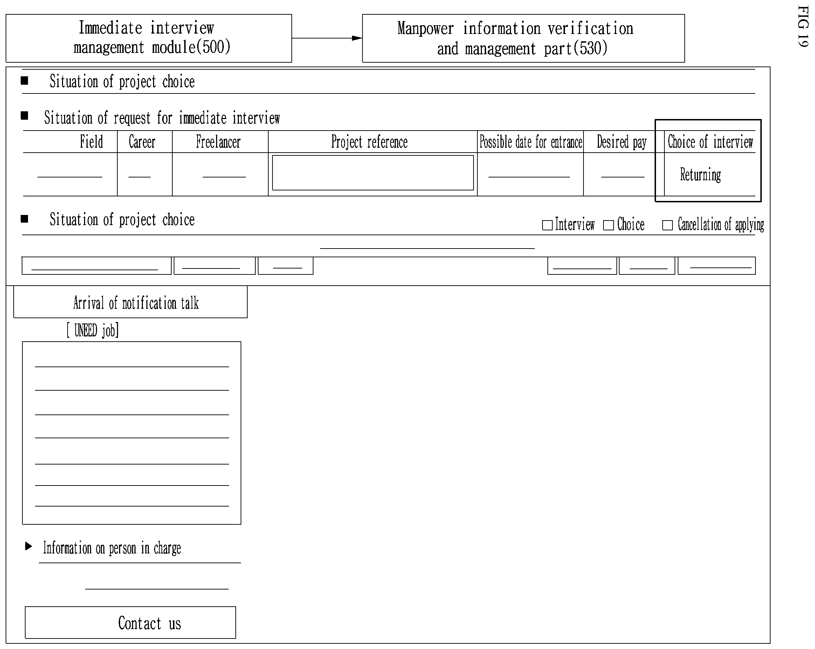

FIG. 19 is a picture indicated before the matched manpower to be provided to the job offer company terminal is finally fixed, and in the case that the maximum recommendation manpower (for example, providing 3 persons based on matched information) or an interview schedule for the relevant manpower exceeds the standard required, a verification process of returning by automatically calculating the case is also carried out so that interview schedules can be managed so as to avoid overlapping.

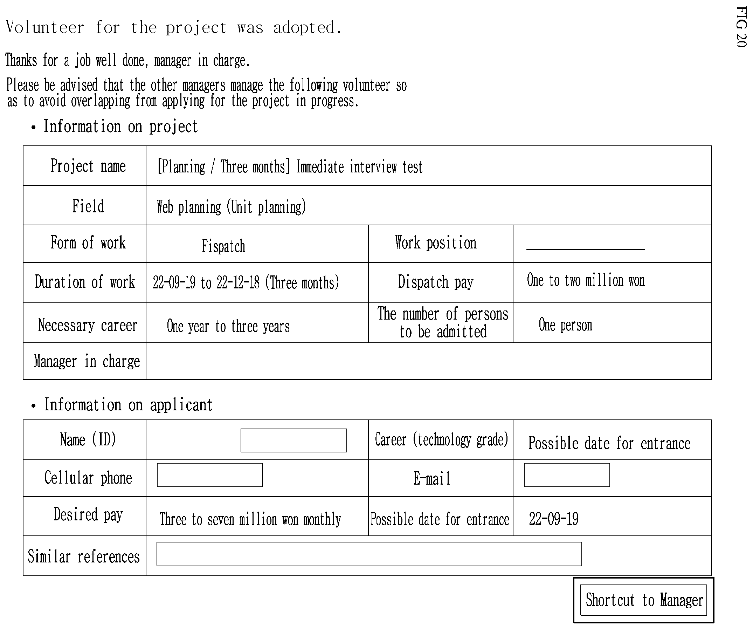

FIG. 20 illustrates a completion picture shown in the case that finally matched manpower for an interview is fixed, and whether or not to proceed with the interview is decided through an examination concerning the finally matched manpower for the interview transmitted from the job offer company terminal.

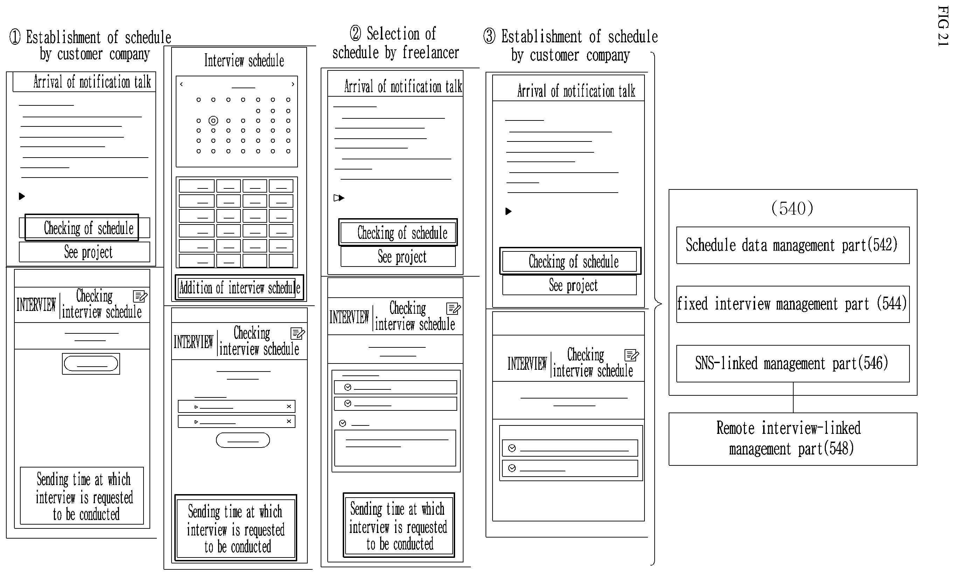

FIG. 21 illustrates a process of fixing a schedule between the job seeker terminal and the job offer company terminal with respect to the interview schedule through the interview schedule management server T from the manager terminal, which causes the schedule to be adjusted conveniently between each terminal by the interview schedule management server T according to the present invention and a commercialized social network service (SNS) being linked with each other.

According to one example, exemplifying a process in which a schedule is conveniently adjusted between each terminal in such a manner that the interview schedule management server T and the commercialized SNS are linked with each other, as illustrated in FIG. 21, firstly, ① a process of adding a schedule through checking of the schedule in order for a customer company to establish the schedule from the job offer company terminal corresponding to the customer company is carried out, after a date and time for an interview clicked are set up, a large number of schedules are selected through clicking of the item "the addition of the interview schedules", and then the item "sending time at which the interview is requested to be conducted" is clicked so as to cause the information to be transmitted to the job seeker (freelancer) terminal. ② After this, in the job seeker terminal, the item "the permission of schedule checking" is clicked through an SNS account linked with the job offer company terminal, and after desired time is selected, the item "sending time at which the interview is requested to be conducted" is clicked so as to cause the information to be transmitted to the customer company (job offer company) terminal, ③ and then in the job seeker terminal, the selected time available mutually is fixed through clicking of the item of schedule checking.

As illustrated in FIG. 21, in the case that an interview schedule is fixed and an interview (a face-to-face interview) is carried out offline, a process of fixing information on a place through a mutual check on the schedule and holding it in common may be carried out.

However, with respect to the first condition requested for the interview from the job offer company terminal, in the case that the condition like "a remote interview (a video interview)" was requested, as shown in FIG. 21, this interview schedule (time) is fixed through the SNS-linked management part 546 which is able to be embodied so that time for a video interview can be fixed, and in the case that both parties decide the time, the remote interview-linked management part 548 shown in FIG. 21 drives a program for a video meeting so that the remote interview can be carried out. The video meeting program may be carried out by being linked with a video meeting server which is commercialized.

According to one example for a method of conducting the video interview, in the case that a method of fixing a schedule through a social network service (SNS) is carried out with a chat window as shown in FIG. 21, the method may be embodied so that the remote interview is connected immediately through the chat window in real time, so the efficiency of use can increase. Of course, separately from this method, a method of carrying out a remote meeting using a linked address by linking of an app on a video meeting publicly known, and so on can also be performed.

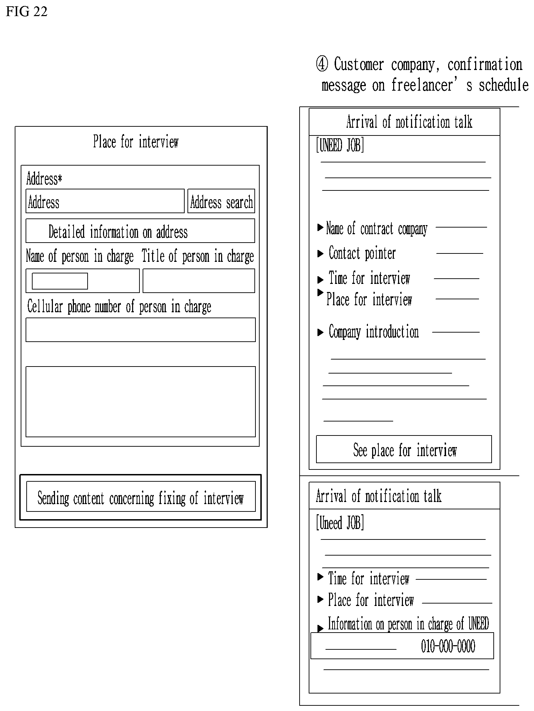

After this, as shown in FIG. 22, when the time at which the interview is requested to be conducted is selected and fixed, "an interview place" is fixed, and then the item "sending the content concerning fixing of the interview" is clicked, so the interview schedule management server T holds the relevant content in common. In this case, the interview schedule management server T finally transmits the final schedule to each relevant terminal by collecting information on the time and place for the interview, and so on as shown in FIG. 22.

The manager terminal may confirm the state of progress on this interview through the schedule control part 540 in real time, and the contract condition management part 550 may transmit a confirmed and corrected contract to the job seeker terminal and the job offer company terminal when information about a decision to fix employment and corrected information about a condition for employment are transmitted through the job offer company terminal An after the interview schedule is conducted.

Based on the process described above, the present invention may provide a service for managing interview schedules rapidly at the same time as correctly matching and providing the optimum manpower according to each project, and may further realize an advantage which is that reliability of a working contract may be guaranteed in such a manner as to complete a written contract in which a contract condition set up in advance at the time of achieving the contract and another condition corrected later, and to hold it in common.

As previously described, although the technical idea of the present invention is described in detail through the preferable exemplary embodiments, the preferable exemplary embodiments are intended for the description and should not be construed as limiting the technical idea. Like this, it is to be understood that various other exemplary embodiments can be made by experts having ordinary skill in the art based on a combination of the exemplary embodiments of the present invention within the scope of the technical idea of the present invention.

## Claims

1. A system of managing an interview schedule, the system comprising:
an interview matching server configured to input and receive inputted information on a job offer and inputted information on job hunting and to apply information on a weighted value which is set up, thereby providing information on suitable manpower through matching;
a job offer company terminal configured to input information on manpower required for a project in progress or work, thereby inputting information on a job offer in the interview matching server or to transmit it to the interview matching server;
a job seeker terminal configured to input information on job hunting including information on a career concerning a person having manpower and seeking a job and information on expenses in the interview matching server or to transmit it to the interview matching server; and
a manager terminal configured to verify and provide the information on the job offer and the information on the job hunting which are matched by connecting with the interview matching server, to add and provide the verified information on the job offer, to perform the management of an interview schedule on the basis of the job offer information and the job hunting information matched, and to provide information on a contract concerning an interview case adopted after an interview is fixed and performed.

2. The system of claim 1, wherein the interview matching server is furnished with a plurality of input parts intended for inputting the inputted information on the job offer inputted from the job offer company terminal,
wherein the interview matching server comprises a job offer information input module configured to input at least one or more of pieces of information among information on a job offer company, information on an occupational category, information on a career, information on a provided period and expenses, information on a work place, information on a project name, and information on preferential treatment, and further comprises an interview establishment condition input part including a preferential interview selection part configured to set up and provide matched time for an interview and the number of matched cases in a state of being graded according to paid expenses, and an interview request type selection part configured to provide selected information by dividing an interview type into the categories of a face-to-face interview, a cable interview, and a remote interview.

3. The system of claim 1 to 2, wherein the interview matching server is furnished with a plurality of input parts intended for inputting the inputted information on the job hunting through the job seeker terminal,
wherein the interview matching server further comprises a job hunting information input module configured to input at least one or more of pieces of information among personal information on a job seeker, information on a desired occupational category, information on a career, information on a desired period and expenses, information on a workable area, information on a project performed previously, information on preferential treatment, information on an interview type.

4. The system of claim 2 to 3, wherein the interview matching server further comprises an interview information formation module comprising:
an interview information extraction part configured to analyze the information inputted as the job offer information and the job hunting information, thereby classifying the analyzed information into unit factors including a project name, a career, pay, a residential place, and a keyword;
a one-line list generation part configured to extract information on the interview type by analyzing the inputted information on the job offer inputted through the job offer information input module, and to extract extracting text data of a one line list by extracting a condition for the job offer; and
a specific condition establishment and confirmation part configured to sort whether a preferential interview is required or not based on the establishment and confirmation of a specific condition for the interview, thereby classifying the text data of the relevant one line list.

5. The system of claim 4, wherein the interview matching server further comprises a matched information formation module, on the basis of the unit factors classified from the interview information extraction part, comprising:
a weighted value information matching part configured to match manpower suitable for the condition of the job offer information with the job hunting information on the basis of information on a weighted value for employment presented from the job offer information;
a similar project information matching part configured to match the job hunting information with unit factors according to an execution career of a similar project based on the career performed by a job seeker extracted from the job hunting information;
an establishment condition matching part configured to perform matching concerning the job hunting information by setting up career information, information on a period and pay, information on working areas, and a keyword corresponding to detailed unit factors, which are extracted from the job hunting information and which are presented and inputted by the job seeker, into the unit factors; and
an integrated matched-information calculation part configured to derive information on matched rankings according to each unit factor or a list concerning manpower matched optimally according to an average of the overall matched rankings from extracting matched information which is matched on the basis of various unit factors.

6. The system of claim 5, wherein the interview matching server further comprises an interview management module configured to manage the interview schedule and the matched information on the manpower by the manager terminal connecting thereto,
wherein the interview management module comprises:
an interview situation management part configured to display the job offer information and the project information inputted through the job offer company terminal, and to provide an interface which manages a situation concerning matching of the manpower calculated through the integrated matched-information calculation part and listed automatically;
a project management part configured to manage the matched situation concerning the manpower listed in such a manner as to match the project according to the job offer information with the manpower information, and to designate and manage a manager in charge of a relevant interview matching case;
a manpower information verification management part configured to verify conformity or non-conformity to qualification by verifying the matched manpower based on a situation concerning matching of the manpower calculated through the integrated matched-information calculation part and listed automatically, and to manage registration through the addition of a new manpower information pool;
a schedule control part configured to transmit finally verified information on the matched manpower to the job seeker terminal and the job offer company terminal, and to manage the interview schedule so as to cause the interview schedule to be selected through a social network service (SNS) account linked with the job seeker terminal and the job offer company terminal; and
a contract condition management part configured to transmit a confirmed and corrected contract to the job seeker terminal and the job offer company terminal when information on a decision to confirm employment and corrected information on a condition for the employment is transmitted through the job offer company terminal after the interview schedule confirmed through the schedule control part is conducted.

7. A method of managing an interview schedule, with respect to the method of managing an interview schedule through the interview schedule management system according to claim 6, the method comprising:
a first step of inputting, through a job offer company terminal, information on manpower required for a project in progress or work in an interview matching server, thereby inputting information on a job offer or transmitting it;
a second step of inputting, through a job seeker terminal, information on job hunting including information on a career concerning a person having manpower and seeking a job and information on expenses in the interview matching server, or transmitting it to the interview matching server;
a third step of inputting and receiving, from the interview matching server, the inputted information on the job offer and the inputted information on the job hunting, and performing matching of information on suitable manpower and providing information on the matching of the manpower by applying information on a weighted value which is set up;
a fourth step of verifying, through a manager terminal, the matched information on the matching of the manpower by connecting with the interview matching server, and adding or deleting newly verified information on the job hunting which is added, thereby providing the job seeker terminal with the information;
a fifth step of transmitting information selected from schedule data intended for fixing the interview schedule to the relevant job seeker terminal and the relevant job offer company terminal on the basis of the information on the job hunting corresponding to the matched information on the manpower adopted from the job offer company terminal; and
a sixth step of carrying out, through the interview matching server from the manager terminal, management of the schedule for conducting an interview concerning the interview schedule fixed through the job seeker terminal and the job offer company terminal, and providing information on a contract concerning an adopted interview case.

8. The method of claim 7, wherein the fourth step is a step of performing the management of the interview schedule through the interview matching server from the manager terminal, reflecting selected information on a preferential interview for setting up and providing matched time for the interview and the number of matched cases in a state of being graded according to paid expenses, and adding selected information by classifying an interview type into categories of a face-to-face interview, a cable interview, and a remote interview, thereby making progress.

9. The method of claim 8, wherein the fourth step is a step of matching the job hunting information and the job offer information with each other by setting up, into unit factors, information on a career, information on a period and pay, information on a working area, and a keyword corresponding to detailed unit factors extracted from the job hunting information and inputted and presented by a job seeker, and a step of extracting matched information matched on the basis of various unit factors, and deriving information on matched rankings according to each unit factor, or a list concerning optimally matched manpower according to an average of the overall matched rankings, thereby displaying information listed.

10. The method of claim 9, wherein the fifth step is a step of being performed through an interview management module of the interview matching server,
the step comprising:
step 5-1) of verifying matched manpower according to a situation concerning matching of manpower calculated through an integrated matched-information calculation part and listed automatically, thereby verifying whether matched manpower is qualified or not, and adding a new manpower information pool, thereby performing registration and management;
step 5-2) of transmitting the information on the matched manpower which is finally verified to the job seeker terminal and the job offer company terminal, and managing the interview schedule so as to cause the interview schedule to be selected through a social network service (SNS) account linked with the job seeker terminal and the job offer company terminal; and
step 5-3) of transmitting information on a decision to fix employment and corrected information on a condition for the employment through the job offer company terminal after the interview schedule confirmed through a schedule control part is carried out.
